# EUROPEAN PATENT SPECIFICATION

(11) **EP 0 398 718 B1**
(45) Date of publication and mention of the grant of the patent: **08.09.1993**
(21) Application number: 90305339.5
(22) Date of filing: 17.05.1990
(51) Int. Cl.: B01J 8/26

(54) **Solids recycle seal system for a fluidized bed reactor**
Dichtungssystem für Feststoffrückführung in einem Wirbelbettreaktor
Système d'étanchéité appliqué au recyclage des matières solides dans un réacteur à lit fluidifié

(30) Priority: 18.05.1989 US 353581
(43) Date of publication of application: 22.11.1990
(73) Proprietor: FOSTER WHEELER ENERGY CORPORATION, Clinton New Jersey 08809-4000 (US)
(72) Inventor: Toth, Stephen Joseph, New Jersey 08833 (US)
(74) Representative: Hitchcock, Esmond Antony

(56) References cited:
- EP-A- 0 082 673
- EP-A- 0 206 066
- EP-A- 0 247 798

## Description

This invention relates to a fluidized bed reactor and a method of operating same and, more particularly, to such a reactor and method in which a solids recycle seal system is provided within the furnace section of the reactor.

Fluidized bed reactors, such as combustors, gasifiers, steam generators, and the like, are well known. In these arrangements, air is passed through a bed of particulate material, including a fossil fuel such as coal and a sorbent for the sulphur generated as a result of combustion of the coal, to fluidize the bed and to promote the combustion of the fuel at a relatively low temperature. The entrained particulate solids are separated externally of the bed and recycled back into the bed. The heat produced by the fluidized bed is utilized in various applications such as the generation of steam, which results in an attractive combination of high heat release, high sulphur capture, low nitrogen oxides emissions and fuel flexibility.

The most typical fluidized bed reactor is commonly referred to as a "bubbling" fluidized bed in which the bed of particulate material has a relatively high density and a well-defined, or discrete, upper surface.

Other types of fluidized bed reactors utilize a "circulating" fluidized bed. According to these processes, the fluidized bed density is well below that of a typical bubbling fluidized bed, the air velocity is greater than that of a bubbling bed, and the flue gases passing through the bed entrain a substantial amount of particulate solids and are substantially saturated therewith. Circulating fluidized beds are also characterized by relatively high solids recycling which makes it insensitive to fuel heat release patterns, thus minimizing temperature variations, and therefore, stabilizing the emissions at a low level. The high solids recycling improves the efficiency of the mechanical device used to separate the gas from the solids for solids recycle, and the resulting increase in sulphur collection and fuel residence times reduces the sorbent and fuel consumption.

However, several problems do exist in connection with these types of fluidized bed reactors. For example, a sealing device such as a seal pot, a "J" valve, a syphon seal, a loop seal, and "L" valve, or similar device as shown, for example, in European Patent No. 208 066A (Serial No. 86107804.6) is required between the low pressure separator outlet and the higher pressure furnace section of the reactor to prevent a back flow of gases and solids from the furnace section to the outlet of the separator. Alternatively a separate sealing chamber may be provided as is shown in European Application No. 82 673A (Serial No. 82306699.8).

According to the invention there is provided a fluidized bed reactor comprising a vessel defining a furnace section therein, means for supporting a fluidized bed in the furnace section, separating means for receiving a mixture of flue gases and entrained particulate material from the fluidized bed, a sealing section with means for supporting a fluidized bed therein, means for passing separated particulate material from the separating means to the fluidized bed in the sealing section, and means for passing materials in the fluidized bed in the sealing section of the fluidized bed in the furnace section when the volume of separated particulate material in the sealing section exceeds a predetermined amount, the fluidized bed in the sealing section sealing off the back flow of the flue gases from the fluidized bed in the furnace to the separating means, characterised in that the sealing section is disposed within the furnace section and is defined along one side by a wall of the furnace section.

The present invention will be described by way of example, with reference to the accompanying drawing, in which:
Figure 1 is a schematic view depicting the system of the present invention; and
Figure 2 is a cross-sectional view taken along the line 2-2 of Figure 1.

Referring to the drawing, a portion of a fluidized bed reactor 10 is shown which includes a furnace section formed by an upright enclosure 12 defined by four walls 12a, 12b, 12c and 12d. An air plenum 14 disposed at the lower end portion of the enclosure for receiving air from and external source. A furnace grid floor 16 is provided at the interface between the lower end of the enclosure 12 and the air plenum 14 and a plurality of fluidizing nozzles 17 are disposed on the floor 16 for allowing the pressurized air from the plenum to pass upwardly into the enclosure 10 for reasons to be described.

Supported on the floor 16 is a bed 18 of particulate material, consisting of coal and relatively fine particles of an sorbent material, such as limestone, for collecting the sulphur generated during the combustion of the coal, in a known manner. It is understood that one or more inlets (not shown) are provided through a wall of the enclosure for introducing the particulate material onto the bed, and a drain pipe (not shown) can be provided which extends through an opening in the floor 16 for discharging spent particulate material from the bed 18. The velocity of air from the plenum 14 passing into the enclosure is controlled so that if fluidizes the particulate material in the bed 18 to form a bubbling or circulating fluidized bed.

It is understood that the walls 12a, 12b, 12c and 12d of the enclosure 12 include a plurality of water tubes disposed in a vertically extending relationship and that flow circuitry (not shown) is provided to pass water through the tubes to convert the water to steam. Since the type of construction is conventional, the walls will not be described in any further detail.

It is also understood that the reactor 10 includes one or more separators provided adjacent the enclosure 12 and connected thereto in a manner to receive the flue gases and entrained particulate material from the fluidized bed 18. Since the separator is conventional and forms no part of the present invention it is not shown in the drawing.

The separator receives the flue gases and entrained particulate material from the fluidized bed 18 in the enclosure 12 and operates in a conventional manner to disengage the particulate material from the flue gases due to the centrifugal forces created in the separator. The separated flue gases are then passed into an through a heat recovery area (not shown).

The separated particles from the separator pass into an inlet nozzle 20 connected to the outlet of the separator. A sparger pipe (not shown), or similar air distribution devices, may be disposed in the inlet nozzle 20 to fluidize the solids as required. The inlet nozzle 20 extends into and through the lower rear wall portion of the enclosure 12 for discharging the separated particulate material into a sealing section disposed in the enclosure 12 and referred to in general by the reference numeral 22.

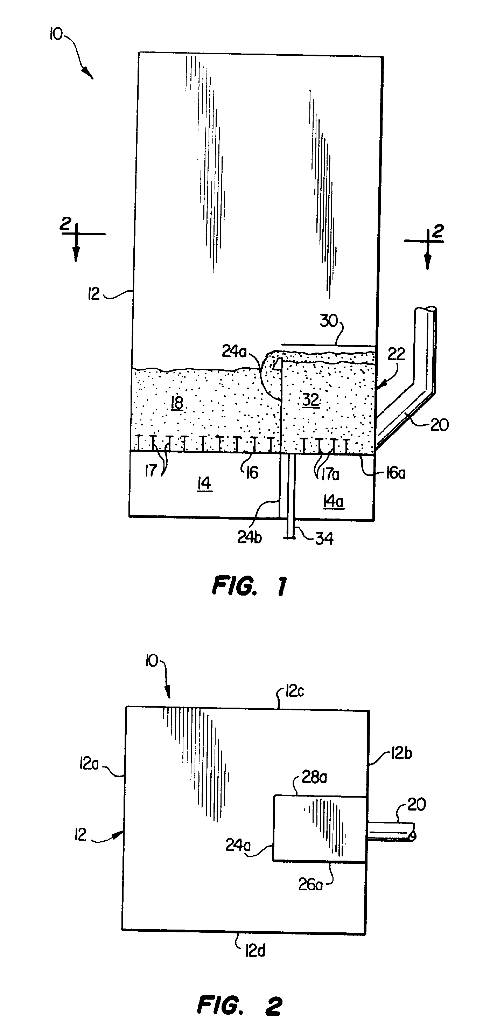

The sealing sections 22 is defined by the enclosure wall 12b, three partitions 24, 26 and 28 and a roof 30. As better shown in Figure 1, the partition 24 includes an upper section 24a extending from the floor 16 to a predetermined height in the enclosure 12 and a lower section 24b extending from the floor of the air plenum 14 to the floor 16. Although not clear from the drawings, it is understood that the partitions 26 and 28 include an upper section and a lower section in a similar manner. Thus, the partition sections 24a and 24b define a common wall between the furnace section of the reactor 10 and the sealing section 22. It is understood that the partitions 24, 26 and 28, including their respective upper and lower sections, as well as the roof 30, may be comprised of refractory, refractory or suitably lined air or water cooled material or combinations thereof, or can be formed by water tubes in the manner described in connection with the walls of the enclosure 12.

The sealing section 22 also includes an air plenum 14a and a floor 16a which are extensions of the air plenum 14 and the floor 16, respectively, and a plurality of fluidizing nozzles 17a extending above the floor 16a.

The separated particulate material from the inlet nozzle 20 is introduced to the interior of the sealing section 22 and builds up on the floor 16a to form a bed 32. An opening is provided in the upper portion of the partition section 24 to permit the particulate material to pass from the bed 32 to the bed 18 as will be described.

In operation, particulate fuel material and sorbent are introduced into the enclosure 12, as needed. Pressurized air from an external source passes into and through the air plenum 14, through the floor 16 and into the bed 18 of particulate material in the enclosure 12 to fluidize the material. The velocity of the air introduced, via the air plenum 14, through the floor 16 and into the interior of the enclosure 12 is established in accordance with the size of the particulate material so that either a bubbling or circulating fluidized bed is formed as discussed above.

A lightoff burner (not shown), or the like, is disposed in the enclosure 12 and is fired to ignite the particulate fuel material. When the temperature of the material reaches a relatively high level, additional fuel is discharged into the enclosure 12. The material in the enclosure 10 is self-combusted and the mixture of air and gaseous products of combustion (hereinafter referred to as "flue gases") passes upwardly through the enclosure 12 and entrain, or elutriate, the relatively fine particulate material in the enclosure. The flue gases, with the entrained particulate material, pass to the upper portion of the enclosure 12 and exit into a cyclone separator (not shown). In the separator, the solid particulate material is separated from the flue gases and the former passes into and through the inlet nozzle 20 and into the sealing section 22 to form the bed 32.

The particulate material from the inlet nozzle 20 builds up in the sealing section 22 until the height of the bed 32 reaches the height of the partition section 24a. When the volume of the material in the sealing section 22 is further increased, the material flows through the opening in the upper portion of the partition section 24a and onto the fluidized bed 18 in the furnace section of the reactor 10 where it mixes with the particulate material in the latter bed. Air is passed from an opening in the partition 24b or from an external source, into the plenum 14a and through the nozzles 17a, to fluidize the particulate material in the bed 32. The volume of the particulate material in the bed 32 combined with that in the inlet nozzle 20, both fluidized and defluidized, as required, serve to form a seal against backflow of flue gases from the furnace section to the particle separator in a direction opposite from the normal system flow described above.

Water is passed through the walls of the enclosure 12 to exchange heat with the fluidized bed 18 and generate steam. The steam then passes through a heat recovery section (not shown) of the reactor before being discharged to external equipment such as a steam turbine.

It is thus apparent that the present invention eliminates the use of expensive sealing devices between the cyclone separator solids outlet and the furnace section of the reactor, yet insures against the backflow of gases from the enclosure 12 to the outlet of the separator through inlet nozzle 20.

It is understood that variations may be made in the foregoing without departing from the scope of the present invention. For example, the particular location of the sealing section 22 within the reactor 10 can be varied, such as by locating it at any elevation within the reactor. Also, the sealing section 22 may transfer solids from the bed 32 to the bed 18 through an outlet nozzle located in the partition sections 24a, 26a, or 28a, the roof 30, or the floor 16a. Also, the roof 30 of the sealing section 23 may be eliminated, and, the system for transferring the solids from the bed 32 to the bed 18 can be located totally outside the reactor. Also, the sealing section may contain individual isolation zones.

## Claims

1. A fluidized bed reactor comprising a vessel (10) defining a furnace section therein, means (16) for supporting a fluidized bed (18) in the furnace section (12), separating means for receiving a mixture of flue gases and entrained particulate material from the fluidized bed, a sealing section (22) with means for supporting a fluidized bed (32) therein, means for passing separated particulate material from the separating means to the fluidized bed in the sealing section, and means for passing materials in the fluidized bed in the sealing section to the fluidized bed in the furnace section when the volume of separated particulate material in the sealing section exceeds a predetermined amount, the fluidized bed in the sealing section sealing off the back flow of the flue gases from the fluidized bed in the furnace to the separating means, characterised in that the sealing section (22) is disposed within the furnace section (12) and is defined along one side by a wall of the furnace section (12).

2. A reactor as claimed in Claim 1 in which the sealing section (22) and the furnace section (12) share a common floor (16).

3. A reactor as claimed in Claim 1 or Claim 2 in which the means for supporting the fluidized bed in the furnace section (12) comprise a plurality of nozzles (17a) for the transmission of fluidizing fluid thereto.

4. A reactor as claimed in any preceding claim in which the means for supporting the fluidized bed in the sealing section (22) comprise a plurality of nozzles (17a) for the transmission of fluidizing fluid thereto.

5. A reactor as claimed in any preceding claim in which the walls defining the furnace section are formed by a plurality of water tubes, the reactor including means for passing water through the tubes to generate steam.

## Patentansprüche

1. Wirbelschichtreaktor, der einen Behälter (10) umfasst, welcher einen Ofenabschnitt darin definiert, ein Mittel (16), um eine Wirbelschicht (18) in dem Ofenabschnitt (12) zu unterstützen, ein Trennmittel, um eine Mischung von Abgasen und mitgeführtem teilchenförmigen Material von der Wirbelschicht zu empfangen, einen Dichtungsabschnitt (22) mit einem Mittel, um eine Wirbelschicht (32) darin zu unterstützen, ein Mittel, um getrenntes, teilchenförmiges Material von dem Trennmittel an die Wirbelschicht in dem Dichtungsabschnitt weiterzugeben, und ein Mittel, um Materialien in der Wirbelschicht in dem Dichtungsabschnitt zu der Wirbelschicht in dem Ofenabschnitt weiterzugeben, wenn das Volumen von getrenntem teilchenförmigen Material in dem Dichtungsabschnitt einen vorbestimmten Betrag überschreitet, wobei die Wirbelschicht in dem Dichtungsabschnitt den Rücklauf von Abgasen von der Wirbelschicht in dem Ofen zu dem Trennmittel abdichtet, dadurch gekennzeichnet, das der Dichtungsabschnitt (22) in dem Ofenabschnitt (12) angeordnet ist, und entlang einer Seite durch eine Wand des Ofenabschnittes (12) definiert ist.

2. Reaktor nach Anspruch 1, in dem der Dichtungsabschnitt (22) und der Ofenabschnitt (12) einen gemeinsamen Boden (16) haben.

3. Reaktor nach Anspruch 1 oder Anspruch 2, in dem das Mittel zur Unterstützung der Wirbelschicht in dem Ofenabschnitt (12) eine Vielzahl von Düsen (17a) umfasst, um fluidisierte Flüssigkeit dorthin zu übertragen.

4. Reaktor nach einem der vorhergehenden Ansprüche, in dem das Mittel zur Unterstützung der Wirbelschicht in dem Dichtungsabschnitt (22) eine Vielzahl von Düsen (17a) umfasst, um fluidisierte Flüssigkeit dorthin zu übertragen.

5. Reaktor nach einem der vorhergehenden Ansprüche, in dem die Wände, die den Ofenabschnitt definieren, aus einer Vielzahl von Wasserrohren gebildet sind, wobei der Reaktor ein Mittel einschliesst, um Wasser durch die Rohre zu geben, um Dampf zu erzeugen.

## Revendications

1. Réacteur à lit fluidisé comportant une cuve (10) définissant à l'intérieur une zone de four, un moyen de support (16) de lit fluidisé (18) dans ladite zone de four (12), des moyens séparateurs pour recevoir un mélange de gaz de foyer et la matière en particules fines entraînées depuis le lit fluidisé, une zone d'étanchéité (22) comportant à l'intérieur un moyen de support du lit fluidisé (32), un moyen de transfert des particules fines de matière retenues au moyen séparateur de lit fluidisé dans la zone d'étanchéité, et un moyen de transfert de matières du lit fluidisé en zone d'étanchéité au lit fluidisé en zone de four lorsque le volume de matière fine en particules séparées dépasse un montant prédéterminé, le lit fluidisé de la zone d'étanchéité bloquant le refoulement des gaz de foyer du lit fluidisé du four vers le moyen séparateur, caractérisé en ce que la zone d'étanchéité (22) est située dans la zone de four (12) et définie le long d'un côté par une paroi de la zone de four (12).

2. Réacteur selon la revendication 1, dont la zone d'étanchéité (22) et la zone de four (12) partagent une sole commune (16).

3. Réacteur selon la revendication 1 ou la revendication 2 dont le moyen de support de lit fluidisé dans la zone de four (12) comporte une pluralité de buses(17a) pour y transmettre le fluide de fluidisation.

4. Réacteur selon l'une ou l'autre des revendications précédentes dont le moyen de support de lit fluidisé dans la zone d'étanchéité (22) comporte une pluralité de buses(17a) pour y transmettre le fluide de fluidisation.

5. Réacteur selon l'une ou l'autre des revendications précédentes dont les parois définissant la zone de four consistent d'une pluralité de tubes à eau, le réacteur comportant un moyen de transmission d'eau par les tubes pour créer de la vapeur.
